# EUROPÄISCHE PATENTSCHRIFT

(11) **EP 2 829 378 B1**
(45) Veröffentlichungstag und Bekanntmachung des Hinweises auf die Patenterteilung: **25.05.2016**
(21) Anmeldenummer: 14177303.6
(22) Anmeldetag: 16.07.2014
(51) Int. Cl.: B29C 45/00, B29C 45/14

(54) **Verfahren zur Herstellung eines zusammenfaltbaren Elements**
Method for producing a collapsible element
Procédé de fabrication d'un élément pliable

(30) Priorität: 25.07.2013 DE 102013107945
(43) Veröffentlichungstag der Anmeldung: 28.01.2015
(73) Patentinhaber: Visiotex GmbH, 89231 Neu-Ulm (DE)
(72) Erfinder: Roell, Friedrich, 23966 Wismar (DE)
(74) Vertreter: Glück Kritzenberger Patentanwälte PartGmbB

(56) Entgegenhaltungen:
- WO-A1-2004/062409
- US-A- 3 018 210
- US-A1- 2010 143 648

## Beschreibung

Die vorliegende Erfindung betrifft ein Verfahren zur Herstellung eines zusammenfaltbaren Elements und ein nach diesem Verfahren hergestelltes Element.

Die US 3018210 offenbart einen Sandwichverbund aus mehreren gewebeartigen Lagen, der in ein Werkzeug gelegt und verpresst wird. Die jeweils äußeren Lagen sind dabei harzgetränkte und die Lagen dazwischen weisen einige durchgehende Perforation auf. Beim Erhitzen und Verpressen fliest das Harz der Äußeren Lagen dann in diese Perforation der textilen Zwischenlage und verbindet so äußere und inner Schicht des Produkts, hier eine Helm. Dieser ist nicht faltbar und weist auch keine Hartelement als äußere Einlegeteil auf.

Es ist Ziel der Erfindung, ein Verfahren zur Herstellung eines faltbaren Elementes zu schaffen, welches mit geringem Aufwand die Herstellung von Protektionskleidung oder Sicherheitshelmen ermöglicht, die gängigen Sicherheitsnormen entsprechen. Die Aufgabe wird mit einem Verfahren gemäß Anspruch 1 und einem Element gemäß Anspruch 10 gelöst. Vorteilhafte Weiterbildungen der Erfindung sind Gegenstand der zugehörigen abhängigen Ansprüche.

Erfindungsgemäß werden in einem textilen Trägermaterial Perforationen angeordnet oder es wird ein textiles Trägermaterial mit Perforationen verwendet. Das Trägermaterial wird nun in eine Spritzgussform überführt. In der Spritzgussform wird bzw. wurde bereits vorher wenigstens ein Hartelement mit wenigstens einem durch ein Kunststoff material füllbaren Einspritzraum so angeordnet, dass der Einspritzraum an dem Träger-material im Bereich der Perforationen anliegt. In der Spritzgussform ist im Bereich der Perforationen an der dem Einspritzraum gegenüberliegenden Seite des Trägermaterials wenigstens ein Hohlraum mit einer Erstreckung in der Ebene des Trägermaterials angeordnet, die größer als die der Perforationen ist. In den Hohlraum wird entweder ein Gegenhalteelement mit einem hinterfüllbaren Raum angeordnet oder der gesamte Hohlraum wird zusammen mit dem Einspritzraum des Hartelements mit einem härtbaren Kunststoffmaterial ausgespritzt. Als Kunststoffmaterial eignet sich insbesondere ein Materialschaum, insbesondere ein PU-Schaum, der eine gute Verbindung mit dem Hartelement eingeht und gute mechanische als auch elastische Eigenschaften aufweist. Anschließend wird das Kunststoffmaterial ausgehärtet. Durch diese Verfahren wird eine innige Verbindung zwischen dem Hartelement und dem Gegenhalteelement geschaffen, die durch das eingespritzte Kunststoffmaterial einstückig durch die Perforationen hindurch verbunden sind. Beim Gegenhalteelement wird dabei entweder der hinterfüllbare Raum wie beim Hartelement mit Kunststoffmaterial gefüllt oder der Hohlraum wird komplett mit Kunststoff ausgespritzt, der nach Erhärtung ein Gegenhalteelement, z.B. in Form eines Innenpolsterteils bildet.

Vorzugsweise wird der Hohlraum in der Spritzgussform bezüglich des Trägermaterials gegenüber dem Einspritzraum angeordnet. Auf diese Weise sind das Hartelement und das Gegenhalteelement gegenüberliegend auf beiden Seiten des Trägermaterials ähnlich einem Manschettenknopf fest mit diesem verbunden.

Vorzugsweise liegt die Erstreckung des Hohlraums in der Ebene des Trägermaterials die im Bereich von 50% bis 150% der Erstreckung des Einspritzraums. Auf diese Weise wird sichergestellt, dass die Größe des Hartelements und des Gegenhalteelements sich in etwa entsprechen.

Vorzugsweise liegt die Erstreckung der Perforation(en) in der Ebene des Trägermaterials im Bereich von 10% bis 50% der Erstreckung des zugeordneten Hartelements. Da das Hartelement und das Gegenhalteelement über die mittels des Kunststoffmaterials im Bereich der Perforationen gebildete Materialbrücke miteinander verbunden werden, sollten die Perforationen eine gewisse Mindestfläche mit Bezug zu dem Hartelement aufweisen, so dass diese Brücke fest genug ist.

Vorzugsweise ist das Kunststoffmaterial ein Kunststoffschaum, insbesondere PU-Schaum ist, der in die Spritzgussform eingespritzt wird. Ein derartiger Kunststoffschaum ist im Fließverhalten und in der Endfestigkeit sehr gut auf die individuelle Anwendung einstellbar.

Vorzugsweise wird als Trägermaterial ein Textil, insbesondere ein Gestrick verwendet, weil dieses eine hohe Festigkeit mit einer Faltbarkeit und weitgehend einstellbaren elastischen Eigenschaften kombiniert. Zudem hält das Kunststoffmaterial auch an der Textur des Textilmaterials besser als auf einer Folie.

Vorzugsweise werden in der Spritzgussform Ausnehmungen für die Hartelemente angeordnet, derart, dass das Trägermaterial in der geschlossenen Spritzgussform an dem Hartelement anliegt. Dies ermöglicht ein leichtes Einspritzen des Kunststoffmaterials derart, dass kein Material zwischen dem Hartelement und dem Trägermaterial herausquillt.

Am einfachsten ist der Spritzvorgang durchzuführen, wenn die Hartelemente vor dem Einlegen des Trägermaterials in der Spritzgussform angeordnet werden.

In einer alternativen Ausführungsform der Erfindung werden in die Hohlräume Gegenhalteelemente eingelegt, die ebenfalls einen hinterfüllbaren Raum aufweisen, der von dem Kunststoffmaterial ausfüllbar ist.

In einer alternativen Ausführungsform der Erfindung werden in einem doppellagigen faltbaren Trägermaterial Perforationen in der Außenlage und Innenlage des Trägermaterials angeordnet. Entweder wird das Trägermaterial bereits mit Perforationen hergestellt oder es wird nach seiner Herstellung mit Perforationen versehen. Das Trägermaterial kann eine doppellagige Folie oder ein Textil sein, z.B. ein Gewebe, ein Gestrick, ein Gewirke oder eine Mischung dieser Textilarten. In der Außenlage des Trägermaterials ist/sind im Bereich der Perforationen wenigstens ein, vorzugsweise mehrere Hartelemente mit einem hinterfüllbaren Einspritzraum angeordnet. Vorzugsweise ist auch an der Innenlage des Trägermaterials im Bereich der Perforationen wenigstens ein Gegenhalteelement mit einem hinterfüllbaren Raum oder lediglich ein Hohlraum angeordnet. Nun wird in den Raum zwischen den beiden Lagen des Trägermaterials ein elastisches Kunststoffmaterial mit einer Viskosität eingespritzt, die so gering ist, dass sie es dem Kunststoffmaterial ermöglicht, durch die Perforationen hindurch in den Einspritzraum des Hartelements und gegebenenfalls in den hinterfüllbaren Raum des Gegenhalteelements bzw. in den Hohlraum zu dringen, die andererseits so hoch ist, dass es nicht durch die Lagen des Trägermaterials (12) nach außen dringen kann. Schließlich wird das Kunststoffmaterial auf eine Endviskosität ausgehärtet, die so niedrig ist, dass das Trägermaterial noch gefaltet werden kann. Als Kunststoffmaterial ist somit ein PU-Schaum geeignet oder andere vorzugsweise schaumigen Thermoplaste, die zum einen gute Adhäsionseigenschaften aufweisen und die andererseits die geforderte Fließfähigkeit und Endviskosität haben. In dieser Ausführungsform kann das Hartelements allein durch das Kunststoffmaterial zwischen den Lagen des doppellagigen Trägermaterials gehalten werden, so dass ein Gegenhalteelement nicht unbedingt notwendig ist.

Durch die Erfindung lassen sich günstig faltbare Elemente wie Schutzkleidung, Helme, Schutzelemente, z.B. Schutzschilder etc. herstellen.

Die Gegenhalteelemente bzw. Innenposterteile können vorzugsweise durch ein in die Spritzform eingelegtes Textil/Vlies oberflächenstabilisiert werden, was insbesondere dann wichtig ist, wenn das Kunststoffmaterial nach dem Aushärten vergleichsweise spröde ist, z.B. ein spröder PU-Schaum.

Der Einspritzraum des Hartelements kann vorzugsweise verankernde Wandelemente oder Verankerungen aufweisen, die nach dem Einspritzen für einen festen Halt des Hartelements am Kunststoffmaterial sorgen. Derartige Elemente können auch in dem hinterfüllbaren Raum des Gegenhalteelements angeordnet werden.

Falls als Element eine Helmkalotte hergestellt werden soll, so wird ein faltbares doppellagiges Trägermaterial verwendet, das zum Beispiel durch thermische Behandlung oder durch dreidimensionales Stricken in eine helmübliche Kalottenform gebracht wird. Die Außenlage des Trägermaterials wird entweder bereits mit Perforationen hergestellt oder nach der Herstellung mit Perforationen versehen. Auf diese Perforationen werden vorzugsweise mehrere Hartelemente mit einem hinterfüllbaren Einspritzraum angeordnet. Anschließend wird zwischen die beiden Lagen des Trägermaterials ein elastisches Kunststoffmaterial mit einer Viskosität eingespritzt, die so niedrig ist, dass sie es dem Kunststoffmaterial ermöglicht, durch die Perforationen hindurch in den Einspritzraum der Hartelemente zu dringen und die andererseits so hoch ist, dass sie nicht durch die Lagen des Trägermaterials dringen kann. Nach dem Einspritzen wird das Kunststoffmaterial auf eine Endelastizität ausgehärtet.

Selbstverständlich kann es für den Einspritzvorgang sinnvoll sein, die Randbereiche des doppellagigen Trägermaterials miteinander oder mit einer Helmrandstruktur zu verbinden, so dass dort kein Kunststoffmaterial austreten kann. Es ist aber auch ausreichend, die beiden Lagen im Randbereich während des Einspritzvorgangs zusammenzupressen.

Das Kunststoffmaterial hat vorzugsweise beim Einspritzen eine sahneartige bis breiartige Konsistenz, das heißt, sie liegt in einem Bereich von vorzugsweise 10² bis 10⁵ mPas. Auf diese Weise ist sichergestellt, dass das Kunststoffmaterial nicht durch die Lagen des Trägermaterials dringt, auch wenn die Lagen des Trägermaterials aus einem Gewebe oder Gestrick bestehen. Zum anderen wird allerdings sichergestellt, dass das Kunststoffmaterial bei einer derartigen Konsistenz bzw. Viskosität durch die Perforationen dringt, die vorzugsweise rund oder rechteckig sind und einen Durchmesser oder eine Kantenlänge zwischen 2 und 30 mm haben. Vorzugsweise sind pro Hartelement wenigstens zwei Perforationen vorgesehen, so dass die Hartelemente drehfestfest auf dem Trägermaterial gehalten werden. Es kann jedoch pro Hartelement auch eine sehr große Perforation vorgesehen sein, deren Fläche einem Großteil der Fläche des Hartelements entspricht.

Vorzugsweise ist das Trägermaterial als doppellagiges Gestrick ausgebildet, bei welchem durch entsprechende Anzahl der gestrickten Maschen und/oder des gestrickten Materials und/oder durch zusätzliche Einbringung von Schuss- oder Kettfäden sichergestellt ist, dass eine kugelförmige Helmkalotte ohne eine thermische Behandlung erzielt wird.

Selbstverständlich kann jedoch die Kugelform des Elements auch nach dem Einspritzen des Kunststoffmaterials realisiert werden, zum Beispiel durch eine thermische Behandlung. In diesem Fall ist es dann vorteilhaft, wenn das Kunststoffmaterial thermisch aushärtet, weil in diesem Fall die Bildung des Elements Hand in Hand geht mit der Aushärtung des Kunststoffmaterials auf seine Endelastizität, die vorzugsweise im Bereich von Schaumstoff, Gummi oder weichem Kunststoff liegen sollte.

Vorzugsweise liegt die Viskosität des Kunststoffmaterials beim Einspritzen in den Raum zwischen den Lagen des Trägermaterials im Bereich von 10² bis 10⁵ mPas, was ein Eindringen des Kunststoffmaterial in den gesamten Einspritzraum zwischen den Lagen und in die Einspritzräume in dem Hartelement und dem Gegenhalteelement sicherstellt, andererseits verhindert, dass das Kunststoffmaterial durch die Lagen des Trägermaterials nach außen dringt.

Die Endfestigkeit des ausgehärteten Kunststoffmaterials liegt vorzugsweise im Bereich von 0,01 bis 0,2 kN/mm² Bei einer derartigen Endelastizität ist zum einen eine gute Stoßdämpfung durch das zweilagige Material gegeben und zum anderen lässt sich aber der Helm in den Abstandsbereichen zwischen den Hartelementen noch gut zusammenfalten.

Vorzugsweise sind mehrere Hartelemente auf dem doppellagigen Trägermaterial in einem Abstand angeordnet, der ein Zusammenfalten des Elements, z.B. Helms problemlos ermöglicht. So ein Abstand kann vorzugsweise zwischen 0,5 cm und 2 cm liegen.

Die Hartelemente sind vorzugsweise Hartprotektoren, insbesondere aus Hartkunststoff, z.B. ABS. Derartige Hartelemente sind für den Einsatz in Helmen hinreichend getestet und für sicher befunden. Besonders geeignet ist hier Polycarbonat.

Die Hartelemente sind vorzugsweise in Form von Zylindern geringer Höhe oder in Form von Quadern oder Rechtecken geringer Höhe mit abgerundeten Kanten ausgebildet. Eine derartige Form der Hartelemente lässt sich leicht bei der Herstellung des Elements handhaben und ist auf der anderen Seite in der Lage, einen guten Flächenschutz auf dem doppellagigen Trägermaterial sicherzustellen. Die Fläche eines Hartelements sollte somit vorzugsweise wenigstens 2 cm², höchstens aber 16 cm² betragen. Die Stärke der Hartelemente, das heißt deren Höhe sollte vorzugsweise zwischen 0,5 und 3 cm, vorzugsweise zwischen 1 und 2 cm liegen. Die Fläche der Hartelemente ist vorzugsweise entsprechend der Krümmung der Helmkalotte gekrümmt.

Vorzugsweise wird als Kunststoffmaterial ein Gummi oder ein vergleichbares elastomerhaltiges Material, insbesondere Materialschaum, verwendet. Ein derartiges Material lässt sich gut in die Spritzgussform einspritzen und ist in der Lage, den Einspritzraum der Hartelemente gut zu hinterfüllen.

Vorzugsweise enthält auch die Innenlage des Trägermaterials Perforationen, auf denen Gegenhalteelemente z.B. in Form von Innenpolsterteilen, insbesondere in der Art eines Kunststoffschaums, mit einem hinterfüllbaren Einspritzraum vorgesehen sind. Vorzugsweise sind die Gegenhalteelemente gegenüberliegend den Hartelementen auf dem Trägermaterial angeordnet. Beim Einspritzen werden dann nicht nur die Hartelemente an der Außenlage des Trägermaterials hinterfüllt, sondern auch die Gegenhalteelemente, so dass ein stabiler Verbund mit den Hartelementen auf der Außenseite, dazwischen das doppellagige Trägermaterial und den Gegenhalteelementen auf der Innenseite erzielt wird. Man kann somit in einem Herstellungsvorgang das gesamte Element inklusive Hartelementen und Innenpolsterung herstellen. Die Hinterfüllung der Einspritzräume der Hartelemente und Gegenhalteelemente auf beiden Seiten des Trägermaterials führt zu einer extremen Verbesserung der Anhaftung sowohl der Hartelemente als auch der Gegenhalteelemente. Dies ist sehr kostengünstig und andererseits wird eine sehr gute Verbindung zwischen dem Trägermaterial, den Gegenhalteelementen und den Hartelementen geschaffen.

Vorzugsweise ist der hinterfüllbare Einspritzraum der Hartelemente, und, falls vorhanden, auch der hinterfüllbare Raum der Gegenhalteelemente, sehr rau oder mit abstehenden Ankerstrukturen versehen, die beim Hinterfüllen mit dem Kunststoffmaterial zu einer innigen formschlüssigen Verbindung des Hartelements bzw. des Gegenhalteelements mit dem Kunststoffmaterial führen sollen.

Vorzugsweise haben die Hartelemente in ihrem Einspritzraum wenigstens eine Entlüftungsbohrung, durch die die Luft beim Einspritzen des Kunststoffmaterials entweichen kann, so dass das Kunststoffmaterial in den gesamten Einspritzraum der Hartelemente eindringen kann, wobei die Formung von Luftblasen, die die Verbindung zwischen dem Kunststoffmaterial und den Hartelementen beeinträchtigen könnten, verhindert wird.

Die Erfindung betrifft in gleicher Weise ein zusammenfaltbares Element, umfassend ein textiles Trägermaterial, welches auf seiner Außenseite wenigstens einen Hartelement und auf seiner Innenseite gegenüberliegend dem Hartelement wenigstens ein Gegenhalteelement trägt, welches Hartelement wenigstens einen dem Trägermaterial zugewandten Einspritzraum aufweist, der mit einem Kunststoffmaterial ausgefüllt ist, das einstückig durch die Perforationen mit zumindest einem Teil des Gegenhalteelements ausgebildet ist. Hinsichtlich der Beschreibung und Vorteile dieses Elements wird auf die obigen Ausführungen im Zusammenhang mit der Beschreibung verwiesen.

Alternativ weist das Element ein doppellagiges faltbares Trägermaterial aufweist, welches auf seiner Außenlage wenigstens ein Hartelement und gegebenenfalls auf seiner Innenlage wenigstens ein Gegenhalteelement trägt. In dem Raum zwischen den Lagen des Trägermaterials ist eine Schicht eines Kunststoffmaterials angeordnet, welche sich durch erste Perforationen in der Außenlage des Trägermaterials in jeweils wenigstens einen hinterfüllbaren Einspritzraum des Hartelements erstreckt. Falls ein Gegenhalteelement angeordnet ist, erstreckt sich das Kunststoffmaterial auch durch zweite Perforationen in der Innenlage des Trägermaterials in jeweils wenigstens einen hinterfüllbaren Raum des Gegenhalteelements oder in einen Hohlraum in der Spritzgussform, der nach dem Spritzvorgang das Gegenhalteelement bildet.

Vorzugsweise sind die Hartelemente auf dem Trägermaterial gegenüber den Gegenhalteelementen angeordnet. Auf diese Weise wird eine besonders gute Festlegung der Hartelemente und Gegenhalteelemente an dem Trägermaterial erzielt, da das Trägermaterial zwischen den Einspritzräumen des Hartelements und des Gegenhalteelements eingebettet ist.

Jedes Hartelement (z.B. Protektor) kann einen oder mehrere Einspritzräume aufweisen. In gleicher Weise kann die Außenlage des Trägermaterials unter einem Hartelement wenigstens einen mit Perforation, jedoch vorzugsweise zwei, drei oder vier Perforationen aufweisen, wodurch das Hartelement zum einen sicher und zum anderen verdrehfest auf der Außenlage des Trägermaterials festgelegt wird.

Hinsichtlich der weiteren Merkmale und Vorteile des Helmes wird auf die Ausführungen oben hinsichtlich des erfindungsgemäßen Verfahrens verwiesen. Diese Ausführungen lassen sich analog auch auf den hergestellten Helm übertragen.

Vorzugsweise hat der Helm mehrere Gegenhalteelemente in Form von Innenpolsterteilen, die jeweils einen oder mehrere hinterfüllbare Einspritzräume aufweisen. Das Kunststoffmaterial verbindet in diesem Fall durch die Perforationen in der Innenlage des Trägermaterials den Raum zwischen den Lagen des Trägermaterials mit dem hinterfüllbaren Einspritzraum der Innenpolsterteile und legt damit die InnenpoIsterteile an dem Trägermaterial fest bzw. es dringt in einen Hohlraum der Spritzgussform ein und bildet danach das Innenpolsterteil. Auf diese Weise wird in einem Herstellungsvorgang ein Helm erzielt, welcher an seiner Außenseite Hartelemente und an seiner Innenseite gegenüber den Hartelementen Innenpolsterteile hat.

Vorzugsweise ist das doppellagige Trägermaterial ein doppellagiges Textil, insbesondere ein doppellagiges Web-Gestrick, welches gestrickte Maschen als auch Schuss- und Kettfäden aufweist. Vorzugsweise liegt das doppellagige Gestrick als dreidimensionales Gestrick vor, das bereits nach dem Strickprozess ohne thermische Behandlung die Kugelform einer Helmkalotte aufweist.

Die Fläche der einem Hartelement zugeordneten Perforation(en) im Trägermaterial sollte vorzugsweise zwischen 1 und 30 cm² liegen. Auf diese Weise wird zwischen dem Hartelement und dem Gegenhaltelement bzw. und der Lage des Kunststoffmaterials zwischen den Lagen eines doppelllagigen Trägermaterials eine ausreichend große Materialbrücke erzeugt, die eine sicheres Festlegen des Hartelements an dem Trägermaterial ermöglicht.

Vorzugsweise ist das Trägermaterial so konturiert, dass es das Hartelement zumindest teilweise einfasst. Auf diese Weise wird eine bessere und homogenere Verbindung zwischen Trägermaterial und Hartelement geschaffen. Da nun die Kanten der Hartelemente durch die Kontur des Trägermaterials geschützt sind, kann dieses besser in die Oberflächentextur des Trägermaterials eingebettet werden, was nicht nur zu einer homogeneren Oberfläche des Elements sondern auch zu einer Stabilisierung des Hartelements auf dem Trägermaterial führt.

Vorzugsweise ist das Kunststoffmaterial ein Kunststoffschaum, insbesondere PU-Schaum, der in die Spritzgussform eingespritzt wird.

Vorzugsweise sind die Perforationen durch eine Netzstruktur des Trägermaterials gebildet.

In einer vorteilhaften Weiterbildung der Erfindung weist wenigstens eine Wand des Einspritzraums des Hartelements wenigstens eine Entlüftungsbohrung auf.

In einer vorteilhaften Weiterbildung der Erfindung haben die Perforationen einen Durchmesser zwischen 10 und 50 mm.

Das Kunststoffmaterial ist vorzugsweise ein Gummi oder ein elastomerhaltiges Material, insbesondere Materialschaum, in welchem Fall eine gute Verbindung der Hartelemente und der eventuellen Gegenhalteelemente mit dem Trägermaterial erzielt wird und auf der anderen Seite auch durch das doppellagige Trägermaterial eine stoßabsorbierende Wirkung erzielt wird. Somit bietet auch der Helmbereich zwischen den Hartelementen einen Dämpfungsschutz. Hinsichtlich der Ausformung der Hartelemente und deren Abstand auf dem Trägermaterial wird auf die Ausführungen hinsichtlich des erfindungsgemäßen Verfahrens verwiesen. Die Erfindung wird nachfolgend beispielsweise anhand der schematischen Zeichnung beschrieben. In dieser zeigen
- Fig. 1: eine geschnittene Seitenansicht einer Spritzgussform mit eingelegten Hartelementen und Trägermaterial und
- Fig. 2: eine geschnittene Seitenansicht eine Teils eines Elements für eine Helmkalotte oder für ein Protektionstextil mit doppellagigem und konturiertem Trägermaterial mit außenseitig angeordneten Hartelementen und innenseitig angeordneten Gegenhalteelementen.

Fig. 1 zeigt eine Spritzgussform 50, um ein textiles Trägermaterial 52, welches Perforationen 54 aufweist, mit Hartelementen 56 in Form von Protektoren und Innenpolsterteilen zu versehen, die den Protektoren gegenüberliegen, z.B. um einen Helm herzustellen. Der Einfachheit halber ist die Spritzgussform plan dargestellt. In Wirklichkeit ist sie kugelsegmentförmig, um entsprechend einen faltbaren Helm herzustellen.

Die Spritzgussform 50 besteht aus einem oberen Teil 60 und einem unteren Teil 62, die beidseitig des Trägermaterials 52 angeordnet werden. Der obere Teil 60 der Spritzgussform hat in etwa kreiszylindrische Aussparungen 64, in die die entsprechend geformte Protektoren 56 eingelegt werden können. Die Protektoren 56 sind hohl und haben an ihrer dem Trägermaterial zugewandten Seite einen Einspritzraum 57. Die Wände des Einspritzraums 57 sind mit Verankerungen 59 versehen, die zur besseren Anhaftung des Protektors 56 an das Kunststoffmaterial nach dessen Einspritzen konzipiert sind. Der untere Teil 62 der Spritzgussform hat Hohlräume 66, die in etwa kreiszylindrisch ausgebildet sind. Beim Schließen der Spritzgussform 50 liegen die beiden Teile 60, 62 der Spritzgussform 50 an dem Trägermaterial an (sieh Fig. 1) und die Protektoren liegen an dem Trägermaterial an als auch den Hohlräumen der unteren Teile 62 der Spritzgussform gegenüber. Der untere Teil 62 der Spritzgussform hat Zufuhrleitungen 68, 70, 72, die mit den Hohlräumen 66 verbunden sind. Diese Zufuhrleitungen 68, 70, 72 sind mit einer Spritzgussvorrichtung verbindbar, so dass durch diese Kunststoffmaterial mit einem hohen Druck eingespritzt werden kann. Spritzgussverfahren sind an sich bekannt, so dass hier nicht weiter darauf eingegangen wird. Das eingespritzte Kunststoffmaterial (z.B. gummiartiges Material) dringt über die Zufuhrleitungen 68, 70, 72 in die Hohlräume 66 und von dort über die Perforationen 54 im Trägermaterial 52 in die Einspritzräume 57, wo es sich mittels der Verankerungen 59 innig mit den Protektoren 56 verbindet. Nach dem Aushärten bildet das Kunststoffmaterial in den Hohlräumen 66 Innenpolsterteile, die über die Materialbrücken entsprechend der Perforationen innig mit den Protektoren 56 verbunden sind. Vor oder nach dem Aushärten, z.B. thermisch, wird die Form geöffnet und das Element entnommen. Die Materialbrücke im Bereich der Verbindung der Zufuhrleitungen 68, 70, 72 mit den Hohlräumen 66 reißt dabei ab. Das Kunststoffmaterial ist in der Zeichnung gepunktet dargestellt. Ein so hergestelltes Element kann für Schutzkleidung oder Helme oder andere Elemente verwendet werden.

Der Helmteil 10 in Fig. 2 besteht aus einem doppellagigen Trägermaterial 12 in der Form eines zweilagigen Web-Gestricks mit einer Außenlage 14 und einer Innenlage 16. Die beiden Lagen 14, 16 des zweilagigen Web-Gestricks sind über Polfäden 18 miteinander verbunden. Sie können jedoch auch durch gestrickte Abstandsstrukturen oder wechselseitig übertragene Maschen miteinander verbunden sein. Zwischen den beiden Lagen 14, 16 des doppellagigen Web-Gestricks 12 ist ein Raum 20 gebildet. Die Außenlage 14 des doppellagigen Web-Gestricks 12 hat Perforationen 22, auf denen jeweils ein Hartelement 24 angeordnet ist. Jedes Hartelement 24 hat die Form eines hohlen Zylinders 26 mit abgerundeten Kanten mit einer Höhe von etwa 0,5 cm bis 1,5 cm und einem Durchmesser von etwa 2 bis 4 cm. Für den Einspritzvorgang kann das Hartelement 26 auf das doppellagige Web-Gestrick aufgedrückt oder aufgeklebt sein. In der hohlen Innenseite des Hartelements 24 ist ein hinterfüllbarer Einspritzraum 28 ausgebildet. Die dem Einspritzraum 28 zugewandten Wände des Hartelements 24 haben in den Einspritzraum abstehende Strukturen 30, um eine bessere, insbesondere formschlüssige Verbindung mit dem Kunststoffmaterial zu ermöglichen. Weiterhin hat das Hartelement 24 Entlüftungsbohrungen 32, um beim Einspritzen von Kunststoffmaterial die in dem Einspritzraum 28 vorhandene Luft entweichen lassen zu können.

In der Innenlage 16 des zweilagigen Web-Gestricks 12 sind optional Perforationen 34 ausgebildet, die nachfolgend als zweite Perforationen bezeichnet werden. Auf diesen zweiten Perforationen (falls sie vorgesehen sind) sind Gegenhalteelemente 36 angeordnet, die aus einem herkömmlichen Kunststoffschaum 38 bestehen. In dem Kunststoffschaum 38 sind wiederum hinterfüllbare Räume 40 ausgebildet. Die hinterfüllbaren Räume 40 sind mit ihrer Öffnung über den Perforationen 34 der zweiten Lage 16 des doppellagigen Web-Gestricks 12 angeordnet. Beim Herstellen des Helms wird in den Raum 20 zwischen den beiden Lagen 14, 16 des doppellagigen Web-Gestricks 12, in den Einspritzraum 28 unter den Hartelementen 24 und den hinterfüllbaren Raum 40 in den Gegenhalteelementen 36 ein visko-elastisches Kunststoffmaterial eingespritzt, welches nach dem Einspritzen auf eine Endelastizität ausgehärtet wird. Auf diese Weise wird das doppellagige Web-Gestrick 12 fest mit den Hartelementen 26 und den Gegenhalteelementen 36 verbunden. Da das Kunststoffmaterial eine Endelastizität im Bereich von Schaumstoff bzw. Gummi hat, das heißt eine Elastizität im Bereich von 0,01 bis 0,2 kN/mm², dient das zweilagige Web-Gestrick 12 ebenfalls als Stoßdämpfer, auch in den Bereichen zwischen den Hartelementen 24, die im vorliegenden Beispiel etwa 2 cm voneinander entfernt sind. An einer so hergestellten Helmkalotte brauchen nur noch Abschlussverblendungen im Kantenbereich und Helmriemen zur Befestigung des Helmes am Kopf angebracht werden. Auf diese Weise lässt sich kostengünstig ein sehr sicherer und zusammenfaltbarer Helm herstellen. Die Faltbarkeit des Helmes wird ermöglicht durch die oben angesprochene Endelastizität des Kunststoffmaterials, so dass sich das verfüllte doppellagige Web-Gestrick 12 gut biegen bzw. falten lässt. Anstelle eines Gegenhalteelements kann auch in der Spritzgussform ein Hohlraum ausgebildet sein, wie es in fig. 1 dargestellt ist. Das dort nach dem Einspritzen vorhandene Kunststoffmaterial bildet dann das Gegenhalteelement.

Die Außenlage 14 des Trägermaterials weist optional Konturen 15 auf, die die Hartelemente 24 umgeben und diese somit homogener und geschützter in die Oberfläche des Trägermaterials einbinden. Eine derartige Kontur 15 lässt sich durch eine voluminösere Textiltechnik, z.B. voluminöse Gestrickbindungen und/oder die Verwendung stärkerer und/oder aufgedoppelter Fäden erzielen, zudem durch Einbindung alternativer Gestricktechniken wie z.B. Einbindung von Kett- und/oder Schussfäden bei Gestricken.

Die Form der Durchmesser und der Abstand der Hartelemente 24 auf dem doppellagigen Web-Gestrick 12 kann von der Darstellung abweichen. Ebenso kann statt mehrerer Perforationen pro Hartelement oder Gegenhalteelement eine große Perforation vorgesehen werden, die z.B. fast die Fläche des Hartelements hat. In diesem Fall reichte eine Perforation für eine sichere Verbindung des Hartelements bzw. Gegenhalteelements mit dem doppellagigen Web-Gestrick nach dem Einspritzen des Kunststoffmaterials.

In gleicher Weise können auf einem Helm auch Hartelemente unterschiedlicher Form angeordnet werden. Statt eines doppellagigen Web-Gestricks können für das Trägermaterial auch andere Materialien, wie zum Beispiel Kunststofffolien, ein Gewebe oder ein gewirktes Material oder Kombinationen dieser Materialien verwendet werden. Statt eines zweilagigen Materials lässt sich auch ein drei- oder vierlagiges Materials verwenden. In diesem Fall könnten zum Beispiel die Hartelemente mit einem anderen Kunststoffmaterial als die Gegenhalteelemente festgelegt werden.

Die Erfindung ist innerhalb des Schutzbereiches der nachfolgenden Ansprüche variierbar.

## Patentansprüche

1. Verfahren zur Herstellung eines zusammenfaltbaren wenigstens ein Hartelement aufweisenden Elements (10), **dadurch gekennzeichnet**, in einem textilen Trägermaterial (12) Perforationen (22) angeordnet werden,
dass das Trägermaterial in eine Spritzgussform überführt wird,
dass in die Spritzgussform wenigstens ein Hartelement (24) mit wenigstens einem Einspritzraum (28) so angeordnet wird, dass der Einspritzraum an dem Trägermaterial im Bereich der Perforationen anliegt,
dass in der Spritzgussform im Bereich der Perforationen an der dem Einspritzraum gegenüberliegenden Seite des Trägermaterials wenigstens ein Hohlraum mit einer Erstreckung in der Ebene des Trägermaterials angeordnet wird, die größer als die der Perforationen ist,
dass der Hohlraum als auch der Einspritzraum mit einem härtbaren Kunststoffmaterial ausgespritzt wird,
und dass das Kunststoffmaterial ausgehärtet wird.

2. Verfahren nach Anspruch 1, bei dem der Hohlraum in der Spritzgussform bezüglich des Trägermaterials gegenüber dem Einspritzraum angeordnet wird.

3. Verfahren nach Anspruch 1 oder 2, **dadurch gekennzeichnet dass** in der Ebene des Trägermaterials die Erstreckung des Hohlraums im Bereich von 50% bis 150% der Erstreckung des Einspritzraums gewählt wird.

4. Verfahren nach einem der vorhergehenden Ansprüche, **dadurch gekennzeichnet, dass** als Trägermaterial ein Textil, insbesondere ein Gestrick verwendet wird.

5. Verfahren nach einem der vorhergehenden Ansprüche, bei welchem in der Spritzgussform Ausnehmungen für die Hartelemente angeordnet werden, derart, dass das Trägermaterial in der geschlossenen Spritzgussform an dem Hartelement anliegt.

6. Verfahren nach einem der vorhergehenden Ansprüche, bei welchem die Hartelemente vor dem Einlegen des Trägermaterials in der Spritzgussform angeordnet werden.

7. Verfahren nach einem der vorhergehenden Ansprüche, bei welchem in die Hohlräume Innenposterteile eingelegt werden, die ebenfalls einen hinterfüllbaren Raum aufweisen, der von dem Kunststoffmaterial ausfüllbar ist.

8. Verfahren zur Herstellung eines zusammenfaltbaren Elements (10) nach einem der vorhergehenden Ansprüchen, bei welchem ein doppellagiges faltbares Trägermaterial (12) verwendet wird, wobei die Perforationen (22) in der Außenlage und gegebenenfalls in der Innenlage des Trägermaterials angeordnet werden, und
dass in den Raum (20) zwischen den beiden Lagen (14, 16) des Trägermaterials ein elastisches Kunststoffmaterial (21) mit einer Viskosität eingespritzt wird, die so gering ist, dass sie es dem Kunststoffmaterial ermöglicht, durch die Perforationen hindurch in den Einspritzraum der Hartelemente und gegebenenfalls in den hinterfüllbaren Raum der Gegenhalteelemente bzw. in die Hohlräume der Spritzgussform zu dringen.

9. Verfahren nach einem der vorhergehenden Ansprüche, **dadurch gekennzeichnet, dass** die Hartelemente und/oder Gegenhalteelemente im Bereich ihres Einspritzraums/hinterfüllbaren Raums mit einem Haftvermittler versehen oder plasmabehandelt werden.

10. Zusammenfaltbares Element (10), umfassend ein textiles Trägermaterial (12), welches auf seiner Außenseite (14) wenigstens einen Hartelement (24) und auf seiner Innenseite gegenüberliegend dem Hartelement wenigstens ein Gegenhalteelement (36) trägt, welches Hartelement wenigstens einen dem Trägermaterial zugewandten Einspritzraum aufweist, der mit einem Kunststoffmaterial ausgefüllt ist, das einstückig durch die Perforationen mit zumindest einem Teil des Gegenhalteelements ausgebildet ist.

11. Element nach Anspruch 10, bei welchem das Trägermaterial (12) ein Abstandstextilmaterial, insbesondere ein doppellagiges Web-Gestrick ist.

12. Element nach Anspruch 11, bei welchem das doppellagige Web-Gestrick (12) unterschiedlich ausgebildete Lagen (14, 16) enthält, die dem Web-Gestrick eine Zylinder- oder Kugelform verleihen.

13. Element nach Anspruch 11 oder 12, bei welchem wobei in dem Raum (20) zwischen den Lagen (14, 16) des Abstandstextilmaterials eine Schicht (21) eines Kunststoffmaterials angeordnet ist, welche Schicht sich durch erste Perforationen in der Außenlage (14) des Trägermaterials in jeweils wenigstens einen hinterfüllbaren Einspritzraum (28) des Hartelements (24) erstreckt, und bei dem sich gegebenenfalls die Schicht (21) des Kunststoffmaterials durch zweite Perforationen (34) in der Innenlage (16) des Trägermaterials (12) hindurch in jeweils wenigstens einen hinterfüllbaren Raum (40) des Gegenhalteelements erstreckt bzw. das Gegenhalteelement bildet.

14. Element nach einem der Ansprüche 10 bis 13, bei welchem das Hartelement (24) ein Gehäuse (26) aus Hartkunststoff, insbesondere Polycarbonat hat.

15. Element nach einem der Ansprüche 10 bis 14, bei welchem das Kunststoffmaterial (21) ein Kunststoffschaum, insbesondere ein PU-Schaum ist.

16. Element nach einem der Ansprüche 10 bis 15, bei dem der Einspritzraum (28) jedes Hartelements stark strukturierte (30) Wände und/oder Verankerungen aufweist.

17. Element nach einem der Ansprüche 10 bis 16, bei welchem das Trägermaterial (12) eine Kontur (15) aufweist, die das Hartelement (24) zumindest teilweise einfasst.

## Claims

1. Method for manufacturing a collapsible element (10) comprising at least one rigid element, **characterised in that** perforations (22) are arranged in a textile support material (12),
**in that** the support material is transferred into an injection mould,
**in that** at least one rigid element (24) comprising at least one injection space (28) is arranged in the injection mould in such a way that the injection space is positioned against the support material in the region of the perforations,
**in that** at least one cavity, having an extension in the plane of the support material which is greater than the extension of the perforations, is arranged in the injection mould in the region of the perforations on the side of the support material opposite the injection space,
**in that** the cavity as well as the injection space is injected full of a curable plastics material,
and **in that** the plastics material is cured.

2. Method according to claim 1, wherein the cavity in the injection mould is arranged opposite the injection space with respect to the support material.

3. Method according to either claim 1 or claim 2, **characterised in that**, in the plane of the support material, the extension of the cavity is selected in the range from 50 % to 150 % of the extension of the injection space.

4. Method according to any of the preceding claims, **characterised in that** a textile, in particular a knitted fabric, is used as the support material.

5. Method according to any of the preceding claims, wherein recesses for the rigid elements are arranged in the injection mould in such a way that the support material lies against the rigid element in the closed injection mould.

6. Method according to any of the preceding claims, wherein the rigid elements are arranged in the injection mould before the support material is laid in.

7. Method according to any of the preceding claims, wherein internal cushion parts, which also comprise a backfillable space which can be filled with the plastics material, are laid in the cavities.

8. Method for manufacturing a collapsible element (10) according to any of the preceding claims, wherein a double-layered, foldable support material (12) is used, the perforations (22) being arranged in the outer layer and optionally also in the inner layer of the support material, and
wherein a resilient plastics material (21), having a sufficiently low viscosity to allow the plastics material to penetrate through the perforations into the injection space of the rigid elements and optionally into the backfillable space in the counterholder elements or into the cavities in the injection mould, is injected into the space (20) between the two layers (14, 16) of the support material.

9. Method according to any of the preceding claims, **characterised in that** the rigid elements and/or counterholder elements are provided with an adhesion promoter or plasma-treated in the region of the injection space/backfillable space thereof.

10. Collapsible element (10), comprising a textile support material (12) which carries at least one rigid element (24) on the outside (14) thereof and at least one counterholding element (36) on the inside thereof opposite the rigid element, said rigid element comprising at least one injection space, which faces the support material and is filled with a plastics material, which is formed integrally with at least part of the counterholder element by way of the perforations.

11. Element according to claim 10, wherein the support material (12) is a spacer textile material, in particular a double-layer knitted web fabric.

12. Element according to claim 11, wherein the double-layer knitted web fabric (12) contains differently formed layers (14, 16) which give the knitted web fabric a cylindrical or spherical shape.

13. Element according to either claim 11 or claim 12, wherein a layer (21) of a plastics material is arranged in the space (20) between the layers (14, 16) of the spacer textile material, said layer extending through first perforations in the outer layer (14) of the support material into at least one backfillable injection space (28) of the rigid element (24) in each case, and wherein the layer (21) of the plastics material optionally extends through second perforations (34) in the inner layer (16) of the support material (12) into at least one backfillable space (40) of the counter holder element in each case or forms the counterholder element.

14. Element according to any of claims 10 to 13, wherein the rigid element (24) has a housing (26) made of rigid plastics material, in particular polycarbonate.

15. Element according to any of claims 10 to 14, wherein the plastics material (21) is a plastics material foam, in particular a polyurethane foam.

16. Element according to any of claims 10 to 15, wherein the injection space (28) of each rigid element comprises strongly structured (30) walls and/or anchorings.

17. Element according to any of claims 10 to 16, wherein the support material (12) has a contour (15) which encloses the rigid element (24) at least in part.

## Revendications

1. Procédé de fabrication d'un élément pliable (10) présentant au moins un élément dur, **caractérisé en ce que** des perforations (22) sont disposées dans un matériau de support textile (12),
que le matériau de support est transféré dans un moule à injection,
qu'au moins un élément dur (24) est disposé dans le moule à injection avec au moins une chambre d'injection (28) de telle manière que la chambre d'injection est en appui contre le matériau de support au niveau des perforations,
qu'au moins une cavité avec une extension, qui est plus grande que celle des perforations, est disposée dans le plan du matériau de support dans le moule à injection au niveau des perforations du côté du matériau de support opposé à la chambre d'injection,
qu'une matière plastique durcissable est projetée dans la cavité ainsi que dans la chambre d'injection,
et que la matière plastique est durcie.

2. Procédé selon la revendication 1, dans lequel la cavité dans le moule à injection est disposée par rapport au matériau de support de manière opposée à la chambre d'injection.

3. Procédé selon la revendication 1 ou 2, **caractérisé par le fait que**, dans le plan du matériau de support, l'extension de la cavité est choisie dans la plage de 50 % à 150 % de l'extension de la chambre d'injection.

4. Procédé selon l'une des revendications précédentes, **caractérisé en ce qu'**un textile, en particulier un tricot, est utilisé en tant que matériau de support.

5. Procédé selon l'une des revendications précédentes, dans lequel des évidements sont disposés dans le moule à injection pour les éléments durs, de telle manière que le matériau de support est en appui contre l'élément dur dans le moule à injection fermé.

6. Procédé selon l'une des revendications précédentes, dans lequel les éléments durs sont disposés avant l'insertion du matériau de support dans le moule à injection.

7. Procédé selon l'une des revendications précédentes, dans lequel des rembourrages intérieurs sont insérés dans les cavités, qui présentent également un espace pouvant être comblé qui peut être rempli de la matière plastique.

8. Procédé de fabrication d'un élément pliable (10) selon l'une des revendications précédentes, dans lequel un matériau de support (12) pliable à double épaisseur est utilisé, les perforations (22) étant disposées dans l'épaisseur externe et le cas échéant dans l'épaisseur interne du matériau de support, et qu'une matière plastique élastique (21) est injectée dans l'espace (20) entre les deux épaisseurs (14, 16) du matériau de support, ladite matière plastique ayant une viscosité qui est si faible qu'elle permet à la matière plastique de pénétrer à travers les perforations dans la chambre d'injection des éléments durs et le cas échéant dans l'espace pouvant être comblé des éléments de retenue ou dans les cavités du moule à injection.

9. Procédé selon l'une des revendications précédentes, **caractérisé en ce que** les éléments durs et/ou éléments de retenue sont dotés, au niveau de leur chambre d'injection/espace pouvant être comblé, d'un agent adhésif ou sont traités par plasma.

10. Elément pliable (10), comprenant un matériau de support textile (12), qui supporte sur sa face externe (14) au moins un élément dur (24) et sur sa face interne opposée à l'élément dur au moins un élément de retenue (36), lequel élément dur présente au moins une chambre d'injection tournée vers le matériau de support, qui est remplie d'une matière plastique qui est réalisée de matière à travers les perforations avec au moins une partie de l'élément de retenue.

11. Elément selon la revendication 10, dans lequel le matériau de support (12) est une matière textile entretoise, en particulier un tricot tissé à double épaisseur.

12. Elément selon la revendication 11, dans lequel le tricot tissé à double épaisseur (12) contient des épaisseurs (14, 16) réalisées de manière différente, qui confèrent au tricot tissé une forme cylindrique ou sphérique.

13. Elément selon la revendication 11 ou 12, dans lequel une couche (21) d'une matière plastique est disposée dans l'espace (20) entre les épaisseurs (14, 16) de la matière textile entretoise, laquelle couche s'étend à travers des premières perforations dans l'épaisseur externe (14) du matériau de support dans respectivement au moins une chambre d'injection (28) pouvant être comblée de l'élément dur (24), et dans lequel la couche (21) de la matière plastique s'étend le cas échéant à travers des secondes perforations (34) dans l'épaisseur interne (16) du matériau de support (12) dans respectivement au moins un espace (40) pouvant être comblé de l'élément de retenue ou forme l'élément de retenue.

14. Elément selon l'une des revendications 10 à 13, dans lequel l'élément dur (24) a une enveloppe (26) en matière plastique dure, en particulier en polycarbonate.

15. Elément selon l'une des revendications 10 à 14, dans lequel la matière plastique (21) est une mousse plastique, en particulier une mousse polyuréthane.

16. Elément selon l'une des revendications 10 à 15, dans lequel la chambre d'injection (28) de chaque élément dur présente des parois (30) et/ou des ancrages à structure renforcée.

17. Elément selon l'une des revendications 10 à 16, dans lequel le matériau de support (12) présente un contour (15) qui englobe au moins partiellement l'élément dur (24).
